# EUROPÄISCHE PATENTANMELDUNG

(11) **EP 4 818 042 A1**
(43) Veröffentlichungstag der Anmeldung: **07.10.2026**
(21) Anmeldenummer: 26163164.2
(22) Anmeldetag: 09.03.2026
(51) Int. Cl.: B64C 13/16, B64C 13/40, B64C 13/50

(54) **BETÄTIGUNGSMECHANISMUS FÜR KLAPPBARE FLÜGEL UND AILERON**

(30) Priorität: 31.03.2025 DE 102025112409
(71) Anmelder: Liebherr-Aerospace Lindenberg GmbH, 88161 Lindenberg (DE)
(72) Erfinder: GAILE, Anton, 88299 Leutkirch (DE); TRENKLE, Christian, 88171 Weiler (DE)
(74) Vertreter: Lorenz Seidler Gossel Part. mbB

(57) **Zusammenfassung**

Die vorliegende Erfindung betrifft eine Vorrichtung zur Steuerung eines Luftfahrzeugs, vorzugsweise eines Flugzeugs, mit einem beweglichen Flügelteil (5), wobei eine gemeinsame Steuereinheit (1) vorgesehen ist, welche dazu ausgelegt ist, einen Steuerungsaktuator (4) und / oder einen Aktuator eines Betätigungsmechanismus (6) des beweglichen Flügelteils und / oder einen Aktuator einer Arretierungseinheit (3) des beweglichen Flügelteils zu steuern und / oder zu regeln. Die erfindungsgemäße funktionale Mehrfachbelegung der gemeinsamen Steuereinheit ermöglicht eine kompaktere, leichtere, günstigere und robustere Ausgestaltung eines Luftfahrzeugs.

## Beschreibung

Die vorliegende Erfindung betrifft eine Vorrichtung zur Steuerung eines Luftfahrzeugs und insbesondere eine Steuerung eines Betätigungsmechanismus für einen klappbaren Teil eines Flügels eines Luftfahrzeugs und für ein Aileron des Flugzeugs.

Zur Steigerung der aerodynamischen Effizienz bei Flugzeugen kann es vorteilhaft sein, sehr dünne und langgestreckte Flügel zu verwenden.

Da eine solche Ausgestaltung jedoch dazu führt, dass die Flügellänge die aktuell definierten Flügellängen für die einzelnen Flugzeugklassen übersteigt, ist es technisch vorteilhaft, derartige Flugzeuge mit zumindest teilweise klappbaren und / oder schwenkbaren Flügeln auszustatten.

Am Boden werden beispielsweise die beweglichen Flügelenden nach oben geklappt, wodurch die effektive Spannweite am Gate oder bereits auf dem Taxiway innerhalb der regulativ vorgegebenen Maximalwerte für den jeweiligen Flugzeugtyp liegt.

Die Einrichtung für das Verfahren des beweglichen Flügelteils stellt dabei aufgrund des geringen zur Verfügung stehenden Bauraums in der Praxis eine besondere Herausforderung dar.

Insbesondere sollte diese Einrichtung eine möglichst hohe Verfügbarkeit, ein geringes Gewicht und möglichst geringe Kosten verursachen.

Die bekannten Systeme besitzen für das Klappen des freien Flügelendes jeweils einen separaten Antrieb welcher unabhängig von anderen Systemen betätigt wird.

Derartige bekannte Lösungen sind jedoch aufwändig, teuer und erhöhen das Gewicht der Konstruktion.

Kombinierte Antriebskonzepte sind grundsätzlich angedacht, jedoch in der Praxis noch problembehaftet, so ist z.B. aktuell keine Kombination der Steuerung bzw. des Antriebs eines Aileron-Aktuators mit dem Flügelschwenkmechanismus bekannt.

Der vorliegenden Erfindung liegt vor diesem Hintergrund die Aufgabe zugrunde, die Nachteile des Stands der Technik abzumildern oder gar ganz zu beseitigen.

Insbesondere liegt der vorliegenden Erfindung die spezifische Aufgabe zugrunde, eine einfache, kostengünstige und zuverlässige Möglichkeit zum Betätigen des beweglichen Flügelteils zu schaffen.

In anderen Worten geht es bei der Erfindung insbesondere darum, einen möglichst einfachen, platzsparenden, leichten, betriebssicheren und kostengünstigen Betätigungsmechanismus bzw. Steuerungsmechanismus für einen klappbaren Flügel zu finden.

Diese Aufgabe wird durch eine Vorrichtung mit den Merkmalen des Anspruchs 1 sowie die weiteren Gegenstände der unabhängigen Ansprüche gelöst.

Vorteilhafte Ausführungsformen der Erfindung sind Gegenstand der Unteransprüche.

Demnach ist eine Vorrichtung zur Steuerung eines Luftfahrzeugs, vorzugsweise eines Flugzeugs, mit einem beweglichen Flügelteil, vorgesehen, wobei eine gemeinsame Steuereinheit vorgesehen ist, welche dazu ausgelegt ist, einen Steuerungsaktuator und / oder einen Aktuator eines Betätigungsmechanismus des beweglichen Flügelteils und / oder einen Aktuator einer Arretierungseinheit des beweglichen Flügelteils zu steuern und / oder zu regeln.

Alternativ oder zusätzlich zu der gemeinsamen Steuereinheit kann eine gemeinsame Antriebseinheit vorhanden sind. Sämtliche im Kontext der gemeinsamen Steuereinheit offenbarten Merkmale gelten selbstverständlich auch für die gemeinsame Antriebseinheit, ohne dass diese explizit wiederholt werden müssen.

In anderen Worten betrifft die vorliegende Erfindung vorzugsweise einen kombinierten Antrieb und / oder eine kombinierte Steuerung für einen hydraulischen Flugsteuerungsaktuator (typischerweise an einem Aileron), einen hydraulisch angetriebenen Flügelschwenkmechanismus und einen hydraulisch angetriebenen Verriegelungsmechanismus für einen klappbaren Flügel. Der Antrieb wird von einer Steuereinheit entsprechend angesteuert.

Eine Idee der vorliegenden Erfindung besteht darin, dass eine einzige Steuereinheit, z.B. eine Hydrostateinheit, dazu ausgelegt ist und dazu verwendet wird, zeitlich versetzt entweder einen Flugsteuerungs- Aktuator, einen Schwenkaktuator oder einen Verriegelungsaktuator anzutreiben, bzw. zu regeln/steuern.

Sollten die einzelnen Geräte/Aktuatoren als elektromechanische statt hydraulische Komponenten ausgeführt sein, ist auch hier eine Kopplung denkbar. In diesem Fall kann eine einzige Steuereinheit, z.B. eine Motor-Kontrollelektronik, dazu genutzt werden, um zeitlich versetzt mehrere elektronische Antriebe anzusteuern/zu regeln.

Sowohl im Falle einer hydraulischen Ausgestaltung der Aktuatoren, als auch im Falle einer elektromechanischen Ausführung der Aktuatoren ermöglicht die Steuerung mittels eines gemeinsamen Antriebs bzw. einer gemeinsamen Steuereinheit eine effizientere Nutzung der Komponenten (durch die Mehrfachfunktionsbelegung der Komponenten) und somit einen reduzierten apparativen Aufwand.

In anderen Worten erfolgt erfindungsgemäße vorzugsweise eine Funktionsintegration der Steuerungsfunktionen verschiedenerer Aktuatoren in einer gemeinsamen Steuereinheit bzw. Antriebseinheit.

Die gemeinsame Steuereinheit kann dazu ausgelegt sein, je nach Flugphase des Luftfahrzeugs mit jeweils nur einem von dem Steuerungsaktuator, dem Aktuator des Betätigungsmechanismus und / oder dem Aktuator der Arretierungseinheit in steuerungstechnische Wirkverbindung zu treten.

Grundsätzlich kann die vorliegende Erfindung mittels hydraulischer und / oder elektronsicher Komponenten implementiert werden.

Die Steuereinheit kann beispielsweise als hydraulische oder elektronische Steuereinheit konfiguriert sein und dazu ausgelegt sein, eine steuerungstechnische Wirkverbindung mittels hydraulischer Mittel, vorzugsweise Ventile, und / oder elektronischer Mittel, vorzugsweise elektronischer Leitungen, zu realisieren.

Auch die von der Steuerungseinheit gesteuerten Aktuatoren können hydraulisch oder elektromechanisch ausgestaltet sein.

Beispielsweise kann es sich bei der gemeinsamen Steuereinheit um eine Hydrostateinheit handeln, welche eine Elektronik, einen Elektromotor, eine Pumpe und ein Hydraulikreservoir aufweist.

Die gemeinsame Steuereinheit kann weiterhin eine hydraulische Versorgung durch ein zentrales Hydrauliksystem des Luftfahrzeugs aufweisen.

Da der Steuerungsaktuator eines Ailerons bzw. Querruders eines Flugzeugs und ein Aktuator eines Betätigungsmechanismus des beweglichen Flügelteils baulich meist benachbart zueinander angeordnet sind, ist eine gemeinsame Steuerung dieser Aktuatoren besonders vorteilhaft in der Praxis.

Die gemeinsame Steuereinheit kann daher dazu ausgelegt sein, mindestens einen Steuerungsaktuator in Form eines Aileron-Aktuators und den Aktuator des Betätigungsmechanismus des beweglichen Flügelteils zu steuern und / oder zu regeln.

Hierbei kann die gemeinsame Steuereinheit dazu ausgelegt sein, nur oder ausschließlich den Steuerungsaktuator in Form eines Aileron-Aktuators und den Aktuator des Betätigungsmechanismus des beweglichen Flügelteils zu steuern und / oder zu regeln.

Die gemeinsame Steuerungseinheit kann den Aileron-Aktuator und den Aktuator des Betätigungsmechanismus des beweglichen Flügelteils eines einzelnen Flügels (z.B. nur des rechten Flügels) oder auch beider Flügel (rechter und linker Flügel) eines Flugzeugs steuern bzw. regeln.

Der Betätigungsmechanismus des beweglichen Flügelteils kann einen Hydraulikmotor oder einen Elektromotor aufweisen, welcher ein Rotationsgetriebe antreibt, und oder der Betätigungsmechanismus kann einen linearen Hydraulikzylinder aufweisen.

Die Arretierungseinheit des beweglichen Flügelteils kann einen Hydraulikzylinder aufweisen, welcher dazu ausgelegt ist, einen oder mehrere Verriegelungsbolzen zu bewegen. Alternativ kann auch ein elektronisch aktuierter Zylinder vorhanden sein.

Alternativ zu einer hydraulischen Lösung kann die vorliegende Erfindung mittels elektronischer Komponenten realisiert werden.

Die gemeinsame Steuereinheit kann eine einzige elektronische Steuereinheit sein, welche dazu ausgelegt ist, einen als elektromechanischer Aktuator ausgelegten Steuerungsaktuator und / oder einen als elektromechanischer Aktuator ausgelegten Aktuator des Betätigungsmechanismus des beweglichen Flügelteils und / oder einen als elektromechanischer Aktuator ausgelegten Aktuator der Arretierungseinheit des beweglichen Flügelteils zu steuern und / oder zu regeln.

Vorzugsweise weist jeder der elektromechanischen Aktuatoren einen eigenen Elektromotor und vorzugsweise mindestens einen dazugehörigen Motorsensor auf.

Die elektronische Steuereinheit kann dazu ausgelegt sein, selektiv und vorzugsweise in Abhängigkeit einer Flugphase des Luftfahrzeugs mit je einem der elektromechanischen Aktuatoren eine elektronische steuerungstechnische Wirkverbindung einzugehen, um diesen elektromechanischen Aktuator zu steuern / zu regeln.

Hierbei kann die Flugphase von der Steuereinheit vorzugsweise automatisch erfasst werden.

Weiterhin betrifft die vorliegende Erfindung ein Luftfahrzeug, vorzugsweise ein Flugzeug, mit mindestens einer Vorrichtung gemäß der vorliegenden Erfindung. Ein derartiges Luftfahrzeug wird nachstehend detaillierter beschrieben.

Ein weiterer Aspekt der vorliegenden Erfindung betrifft eine Verwendung einer Vorrichtung gemäß der vorliegenden Erfindung zur Steuerung und / oder Fertigung eines Luftfahrzeugs, insbesondere eines Flugzeugs.

Weitere Vorteile, Merkmale und Aspekte der vorliegenden Erfindung lassen sich in anderen Worten wie folgt beschrieben:
Die vorliegende Erfindung betrifft vorzugsweise eine kombinierte Steuerung und optional einen kombinierten Antrieb für einen Flugsteuerungsaktuator, vorzugsweise einen Aileron-Aktuator, einen Aktuator eines Flügelschwenkmechanismus (ein Beispiel eines Betätigungsmechanismus für einen beweglichen Flügelteil) und einen Aktuator eines Verriegelungsmechanismus (ein Beispiel einer Arretiereinheit) für einen klappbaren Flügel.

Eine Idee der Erfindung besteht darin, dass eine gemeinsame Steuereinheit, vorzugsweis eine Hydrostateinheit, dazu verwendet wird, entweder den Flugsteuerungs-Aktuator, den Aktuator des Flügelschwenkmechanismus oder den Aktuator des Verriegelungsmechanismus anzutreiben, bzw. zu regeln und / oder zu steuern.

Da diese drei Aktuatoren in der Praxis fast nie gleichzeitig betätigt bzw. benötigt werden, hat es sich in der Praxis als vorteilhaft erwiesen, eine gemeinsame, beispielsweise hydraulische, Steuereinheit, vorzugsweise inklusive zugehöriger Elektronik, zu verwenden, um alle drei Aktuatoren zu versorgen bzw. zu regeln.

Gemäß einer Ausgestaltung ist vorgesehen, eine einzige Steuereinheit, vorzugsweise eine hydrostatische Einheit mit einer Kontroll- und Leistungselektronik, einem Elektromotor, einer Hydraulikpumpe, einem Reservoir und einigen hydraulischen Ventilen, mittels eines hydraulischen Umschaltventils wahlweise jeweils mit einem der drei Aktuatoren (Flugsteuerungs-Aktuator, Aktuator des Betätigungsmechanismus, Aktuator der Arretierungseinheit) zu verbinden.

Es ist vorzugsweise vorgesehen, dass im Flug die Steuereinheit mit dem Flugsteuerungsaktuator (vorzugsweise Aileron-Aktuator) verbunden ist und am Boden wahlweise mit dem Aktuator des Betätigungsmechanismus oder dem Aktuator der Arretierungseinheit verbunden ist.

Da alle drei Aktuatoren vorzugsweise räumlich nahe beieinanderliegen, bietet diese Kombination einen Vorteil bezüglich Gewicht, Kosten und Bauvolumen.

Zur Erhöhung der Verfügbarkeit des Systems ist es weiterhin möglich, die Steuereinheit als EHB (Elektro Hydraulik Backup) - Einheit auszuführen oder mit einer solchen Einheit auszustatten.

Dieses bedeutet vorzugsweise, dass die Ansteuerung der Aktuatoren durch die Steuereinheit entweder über eines der zentralen Hydrauliksysteme des Luftfahrzeugs mittels mindestens eines Servoventils oder über die dezentrale hydraulische Einheit (EHB-Einheit) erfolgt.

Diese Ausgestaltung bietet den Vorteil, dass alle von dieser Einheit angesteuerten Systeme bzw. Aktuatoren von zwei unabhängigen Energiequellen versorgt werden, was die Betriebssicherheit weiter erhöht.

Die steuerungstechnische Wirkverbindung zwischen der gemeinsamen Steuereinheit und jeweils einem der drei Aktuatoren kann vorzugsweise selektiv und / oder sequenziell umgeschaltet werden.

Die Umschaltung zur sequenziellen Ansteuerung die verschiedenen Systeme erfolgt beispielsweise mittels hydraulischer Umschaltventile.

Eine Ansteuerung eines Aileron-Aktuators und eines Aktuators des Betätigungsmechanismus durch eine gemeinsame Steuereinheit bietet sich aufgrund der räumlichen Nähe dieser Komponenten zueinander besonders an, grundsätzlich sind jedoch auch andere Kombinationen denkbar.

Im Rahmen der vorliegenden Erfindung können sowohl elektromechanische, als auch hydraulische Aktuatoren zum Einsatz kommen.

Sind die einzelnen Aktuatoren für die Funktionen Flugsteuerung, Bewegen des beweglichen Teils des Flügels und Flügel verriegeln/entriegeln als Elektro Mechanische Aktuatoren (EMAs) ausgeführt, kann die selbe sequenzielle Ansteuerung der Aktuatoren auf elektrischem Weg erfolgen, wie sie bei hydraulischen Aktuatoren auf hydraulischem Wege mittels Ventilen erfolgt.

Hierzu wird vorzugsweise eine einzige gemeinsame Steuereinheit, beispielsweise eine Motor-Kontroll-Elektronik (MCE) selektiv bzw. zeitlich versetzt mit drei unterschiedlichen Aktuatoren verbunden.

Wie bei der hydraulischen Lösung wird die gemeinsame Steuereinheit vorzugsweise im Flug mit dem Flugsteuerungsaktuator (insbesondere Aileron-Aktuator) verbunden, um diesen zu steuern.

Am Boden wird die gemeinsame Steuereinheit vorzugsweise sequenziell zuerst mit dem Aktuator der Arretierungseinheit und anschließend mit dem Aktuator des Betätigungsmechanismus verbunden, oder umgekehrt.

Die Umschaltung erfolgt beispielsweise mittels mindestens eines Halbleiterschalters, wobei prinzipiell auch Relais denkbar sind.

Durch eine erfindungsgemäße Vorrichtung wird für die drei Aktuatoren vorzugsweise nur eine gemeinsame Steuereinheit benötigt, wodurch Kosten und Gewicht eingespart werden können.

Auch reduziert sich aufgrund der geringeren Anzahl der Geräte die Fehlerraten und die Wartungskosten.

Nachstehend wird ein Luftfahrzeug, vorzugsweise ein Flugzeug, gemäß der vorliegenden Erfindung exemplarisch beschrieben.

Ein derartiges Flugzeug weist vorzugsweise einen beweglichen Flügelteil (auch als klappbares Flügelsegment bezeichnet) auf, wobei eine gemeinsame Steuereinheit vorhanden ist, welche Funktionen der Steuerung mindestens eines Flugsteuerungsaktuators, eines Aktuators des Betätigungsmechanismus für den beweglichen Teil des Flügels und eines Aktuators einer Arretierungseinheit zur Arretierung des beweglichen Teils des Flügels in einer gewünschten Position kombiniert bzw. in sich vereint.

Vorzugsweise ist je nach Flugphase jeweils immer nur einer der Aktuatoren mit der gemeinsamen Steuereinheit (vorzugsweise Hdrostateinheit, EHPP) verbunden.

Sind hydraulische Aktuatoren und eine hydraulische Steuereinheit vorgesehen, so findet vorzugsweise eine hydraulische Verbindung zwischen der Steuereinheit und dem jeweiligen Aktuator vorzugsweise mittels hydraulischer Umschaltventile statt.

Bei der gemeinsamen Steuereinheit kann es sich somit um eine Hydrostateinheit (EHPP) handeln, welche vorzugsweise eine Elektronik, einen Elektromotor, eine Pumpe und ein Hydraulikreservoir aufweist.

Die gemeinsame Steuereinheit kann eine Hydrostateinheit (EHPP) kombiniert mit einer hydraulischen Versorgung durch das zentrale Hydrauliksystem aufweisen.

Vorzugsweise teilen sich nur der Aileron-Aktuator und der Aktuator des Betätigungsmechanismus des beweglichen Teils des Flügels eine gemeinsame Steuereinheit, vorzugsweise EHPP.

Bei dem Flugsteuerungsaktuator handelt es sich vorzugsweise um einen Aktuator eines Ailerons (Querruders).

Der Betätigungsmechanismus des beweglichen Teils des Flügels kann einen Hydraulikmotor aufweisen, welcher vorzugsweise ein Rotationsgetriebe antreibt.

Der Betätigungsmechanismus des beweglichen Teils des Flügels kann alternativ oder zusätzlich einen linearen Hydraulikzylinder aufweisen.

Die Arretierungseinheit kann einen Hydraulikzylinder aufweisen, welcher einen oder mehrere Verriegelungsbolzen bewegt.

Weiterhin kann ein erfindungsgemäßes Flugzeug eine Systemarchitektur aufweisen, bei der eine einzige Steuereinheit (vorzugsweise MCE) dazu genutzt wird, mehrere elektromechanische Aktuatoren vorzugsweise zeitlich versetzt anzusteuern, wobei es dabei vorzugsweise um einen Flugsteuerungsaktuator, einen Aktuator eines Betätigungsmechanismus des beweglichen Flügelteils und einen Aktuator einer Arretierungseinheit des beweglichen Teils des Flügels handelt.

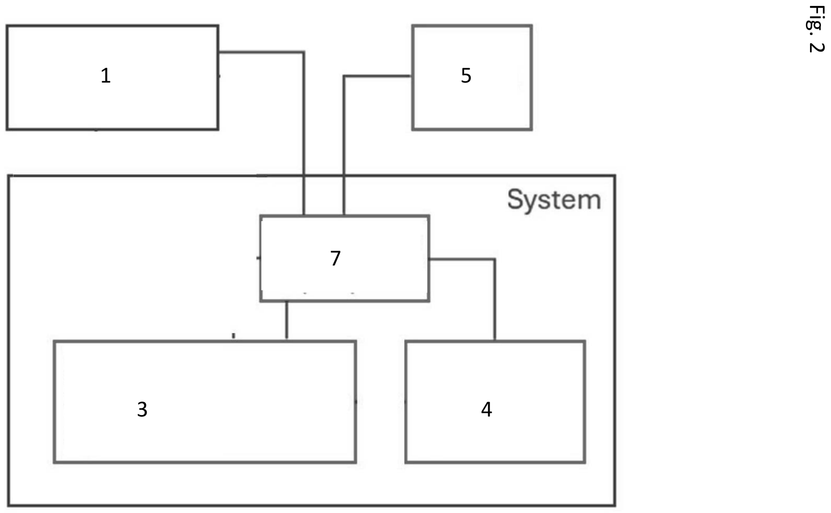

Eine solche Systemarchitektur ist beispielhaft in Fig. 2 gezeigt.

Vorzugsweise kann eine Anzahl oder jeder der von der Steuereinheit gesteuerten Aktuatoren (insbesondere EMAs) mindestens einen eigenen Elektromotor und vorzugsweise mindestens einen dazugehörigen Motorsensor aufweisen.

Die gemeinsame Steuereinheit (z.B. MCE) kann dazu ausgelegt sein, wahlweise mit je einem der EMAs elektrisch verbunden oder verbindbar zu sein, um diesen EMA zu steuern/ zu regeln.

Weiterhin ergeben sich ergeben sich folgende beispielhafte Vorteile durch die vorliegende Erfindung:
Durch die Funktionsintegration der Steuerung verschiedener Komponenten in einer gemeinsamen Steuereinheit sowie optional zusätzlich das Vorsehen einer gemeinsamen, vorzugsweise durch die Steuereinheit gesteuerten, Antriebseinheit erfolgt eine besonders effiziente Nutzung der Komponenten, was eine leichtere und kompaktere Bauweise ermöglicht.

Beispielsweise muss nur eine gemeinsame Redundanz-Steuereinheit zur Funktionssicherheit vorgesehen sein, statt mehrerer separater Redundanz-Steuereinheiten für die jeweiligen Komponenten.

Dies ermöglicht eine kompaktere und leichtere und somit letztendlich aufgrund des reduzierten Treibstoffverbrauchs umweltschonendere Bauweise eines LuftFahrzeugs.

Zudem kann ein robusteres System aufgrund der reduzierten Anzahl von Steuerungsbauteilen ermöglicht werden.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können.

Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden, die Offenbarung ist also nicht auf explizit genannte Merkmalskombinationen beschränkt.

Weitere Einzelheiten und Vorteile der Erfindung werden anhand der in der Zeichnung dargestellten Ausführungsbeispiele näher erläutert.

Hierbei bezeichnen gleiche Bezugszeichen gleiche oder ähnliche Bauteile.

Es zeigt:
- Figur 1:: schematisch eine erste Ausgestaltung einer Vorrichtung gemäß der vorliegenden Erfindung.
- Figur 2:: schematisch eine zweite Ausgestaltung einer Vorrichtung gemäß der vorliegenden Erfindung.

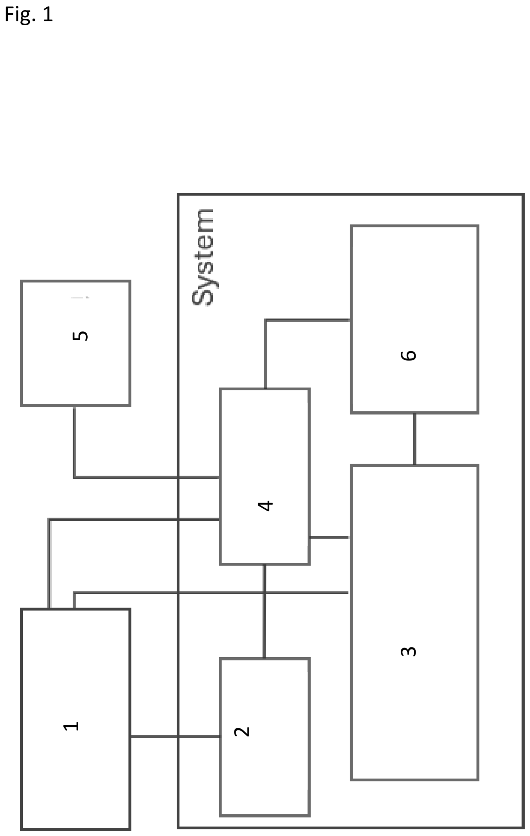

Fig. 1 zeigt eine erste Ausgestaltung der vorliegenden Erfindung, bei der eine Verwendung von hydraulischen Aktuatoren erfolgt.

Eine gemeinsame Steuereinheit 1 ist mit einer Leistungselektronik 2, einer Arretierungseinheit 3 und einem hydraulischen Aktuator 4 verbunden, welcher ein Aileron / Querruder 5 aktuiert.

Die gemeinsame Steuereinheit 1 ist beispielsweise eine Hydrostateinheit oder weist eine solche auf.

Über die Arretierungseinheit 3 und den elektromechanischen Aktuator 4 ist die Steuereinheit 1 zudem mit dem Betätigungsmechanismus 6 verbunden.

Die Verbindungen zwischen der Steuereinheit 1 und den übrigen ein Fig. 1 gezeigten Komponenten können beliebig geschaltet werden, vorzugsweise ändern sich die Verbindungen mit der Flugphase eines Luftfahrzeugs. Dies gilt auch für die Variante in Fig. 2.

Fig. 2 zeigt eine zweite Ausgestaltung der vorliegenden Erfindung, bei der eine Verwendung von elektromechanischen Aktuatoren erfolgt.

Die gemeinsame Steuereinheit 1 ist in diesem Beispiel mit einer Motorkontrolleinheit (MCE) 7 verbunden, die wahlweise das Aileron 5 steuert (und somit einem Flugsteuerungsaktuator zugeordnet werden kann) und / oder die Arretierungseinheit 3 steuert und / oder den Betätigungsmechanismus 6 steuert.

In beiden in den Figuren gezeigten Fällen werden ein Aktuator zur Flugzeugsteuerung, insbesondere ein Aileron-Aktuator, ein Aktuator des Betätigungsmechanismus eines beweglichen Teils des Flügels und ein Aktuator einer Arretierungseinheit des beweglichen Teils des Flügels mittels einer gemeinsamen Steuereinheit 1 gesteuert und / oder geregelt.

## Patentansprüche

1. Vorrichtung zur Steuerung eines Luftfahrzeugs, vorzugsweise eines Flugzeugs, mit einem beweglichen Flügelteil, wobei eine gemeinsame Steuereinheit vorgesehen ist, welche dazu ausgelegt ist, einen Steuerungsaktuator und / oder einen Aktuator eines Betätigungsmechanismus des beweglichen Flügelteils und / oder einen Aktuator einer Arretierungseinheit des beweglichen Flügelteils zu steuern und / oder zu regeln.

2. Vorrichtung gemäß Anspruch 1, wobei die gemeinsame Steuereinheit dazu ausgelegt ist, je nach Flugphase des Luftfahrzeugs mit jeweils nur einem von dem Steuerungsaktuator, dem Aktuator des Betätigungsmechanismus und / oder dem Aktuator der Arretierungseinheit in steuerungstechnische Wirkverbindung zu treten.

3. Vorrichtung gemäß Anspruch 1 oder 2, wobei die Steuereinheit als hydraulische oder elektronische Steuereinheit konfiguriert ist und dazu ausgelegt ist, eine steuerungstechnische Wirkverbindung mittels hydraulischer Mittel, vorzugsweise Ventilen, und / oder elektronischer Mittel, vorzugsweise elektronischer Leitungen, zu realisieren.

4. Vorrichtung gemäß einem der vorhergehenden Ansprüche, wobei es sich bei der gemeinsamen Steuereinheit um eine Hydrostateinheit handelt, welche eine Elektronik, einen Elektromotor, eine Pumpe und ein Hydraulikreservoir aufweist.

5. Vorrichtung gemäß Anspruch 4, wobei die gemeinsame Steuereinheit weiterhin eine hydraulische Versorgung durch ein zentrales Hydrauliksystem des Luftfahrzeugs aufweist.

6. Vorrichtung gemäß einem der vorhergehenden Ansprüche, wobei die gemeinsame Steuereinheit dazu ausgelegt ist, einen Steuerungsaktuator in Form eines Aileron-Aktuators und den Aktuator des Betätigungsmechanismus des beweglichen Flügelteils zu steuern und / oder zu regeln.

7. Vorrichtung gemäß einem er vorhergehenden Ansprüche, wobei der Betätigungsmechanismus des beweglichen Flügelteils einen Hydraulikmotor, welcher ein Rotationsgetriebe antreibt, und / oder einen linearen Hydraulikzylinder aufweist.

8. Vorrichtung gemäß einem der vorhergehenden Ansprüche, wobei die Arretierungseinheit des beweglichen Flügelteils einen Hydraulikzylinder aufweist, welcher dazu ausgelegt ist, einen oder mehrere Verriegelungsbolzen zu bewegen.

9. Vorrichtung gemäß einem der vorhergehenden Ansprüche, wobei die gemeinsame Steuereinheit eine, vorzugsweise eine einzige, elektronische Steuereinheit ist, welche dazu ausgelegt ist, einen als elektromechanischer Aktuator ausgelegten Steuerungsaktuator und / oder einen als elektromechanischer Aktuator ausgelegten Aktuator des Betätigungsmechanismus des beweglichen Flügelteils und / oder einen als elektromechanischer Aktuator ausgelegten Aktuator der Arretierungseinheit des beweglichen Flügelteils zu steuern und / oder zu regeln.

10. Vorrichtung gemäß Anspruch 9, wobei mindestens einer, vorzugsweise jeder der elektromechanischen Aktuatoren einen eigenen Elektromotor und vorzugsweise einen dazugehörigen Motorsensor aufweist.

11. Vorrichtung gemäß Anspruch 10, wobei die elektronische Steuereinheit dazu ausgelegt ist, selektiv und vorzugsweise in Abhängigkeit einer Flugphase des Luftfahrzeugs mit je einem der elektromechanischen Aktuatoren eine elektronische steuerungstechnische Wirkverbindung einzugehen, um diesen elektromechanischen Aktuator zu steuern und / oder zu regeln.

12. Luftfahrzeug, vorzugsweise Flugzeug, mit mindestens einer Vorrichtung gemäß einem der vorhergehenden Ansprüche.

13. Verwendung einer Vorrichtung gemäß einem der Ansprüche 1 bis 11 zur Steuerung und / oder Fertigung eines Luftfahrzeugs, insbesondere eines Flugzeugs.
